(19) Europäisches Patentamt / European Patent Office / Office européen des brevets

(11) **EP 3 394 575 B1**

(12) **EUROPÄISCHE PATENTSCHRIFT**

(45) Veröffentlichungstag und Bekanntmachung des Hinweises auf die Patenterteilung:
**26.05.2021   Patentblatt 2021/21**

(51) Int Cl.:
*G01F 1/84* (2006.01)    *G01N 9/00* (2006.01)
*G01F 1/74* (2006.01)

(21) Anmeldenummer: **16797895.6**

(22) Anmeldetag: **17.11.2016**

(86) Internationale Anmeldenummer:
**PCT/EP2016/077942**

(87) Internationale Veröffentlichungsnummer:
**WO 2017/108283 (29.06.2017 Gazette 2017/26)**

(54) **VERFAHREN ZUM ERMITTELN EINES PHYSIKALISCHEN PARAMETERS EINER MIT GAS BELADENEN FLÜSSIGKEIT**

METHOD FOR DETERMINING A PHYSCAL PARAMETER OF A LIQUID CHARGED WITH GAS

PROCÉDÉ DE DÉTERMINATION D'UN PARAMÈTRE PHYSIQUE D'UN LIQUIDE CHARGÉ DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2015   DE 102015122661**

(43) Veröffentlichungstag der Anmeldung:
**31.10.2018   Patentblatt 2018/44**

(73) Patentinhaber: **Endress+Hauser Flowtec AG
4153 Reinach (CH)**

(72) Erfinder:
• **ZHU, Hao
85354 Freising (DE)**

• **RIEDER, Alfred
84032 Landshut (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**EP-B1- 1 190 221          WO-A1-01/01086
US-A- 4 262 523          US-A1- 2011 023 626
US-A1- 2011 264 385**

**Beschreibung**

Die vorliegende Erfindung betrifft ein Verfahren zum Ermitteln eines physikalischen Parameters einer mit Gas beladenen Flüssigkeit mittels eines Messaufnehmers mit mindestens einem Messrohr zum Führen der mit Gas beladenen Flüssigkeit, wobei das Messrohr einen einlassseitigen Endabschnitt und einen auslassseitigen Endabschnitt aufweist, wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Schwingungen anregbar ist, wobei aus dem Schwingungsverhalten des Messrohrs Massedurchfluss und Dichte der mit Gas beladenen Flüssigkeit bestimmbar sind. Die Messwerte für Massedurchfluss und Dichte weisen jedoch Querempfindlichkeiten zur Schallgeschwindigkeit bzw. Kompressibilität der mit Gas beladenen Flüssigkeit auf, welche mit zunehmender Gasbeladung steigt. Eine Kompensation dieser Querempfindlichkeiten ist daher erwünscht.

Die Veröffentlichung US 2011/0264 385 A1 offenbart ein Massedurchfluss- und Dichtemessgerät, das Messungen bei einer niedrigen Schwingungsfrequenz und bei einer hohen Schwingungsfrequenz durchführt und auf Basis dieser Messung die Schallgeschwindigkeit bestimmt, um damit weitere Korrekturen durchzuführen.

Aus der Veröffentlichung WO 01/01086 A1 ein Verfahren zur Kompressibilitätskompensation bei der Massedurchflussmessung in einem Coriolis Massedurchflussmesser offenbart. Dabei wird jeweils eine Massedurchflussmessung bei zwei unterschiedlichen Moden durchgeführt, von denen einer ein Biegeschwingungsmode und ein anderer ein Radialmode ist. Aus dem Vergleich der Massedurchflusswerte die mittels dieser beiden Moden ermittelt werden. Dies ist jedoch insofern ein problematischer Ansatz, als die Radialmodeschwingungen erhebliche Abhängigkeit vom Strömungsprofil und vom statischen Druck aufweisen zudem sind mehr Sensoren als die üblichen zwei erforderlich, um sowohl Biegeschwingungen als auch Radialmodeschwingungen erfassen zu können. Gleichermaßen ist eine komplexere Erregerstruktur erforderlich. Es ist daher die Aufgabe der vorliegenden Erfindung ein Messverfahren mit einer robusteren und zugleich einfacheren Kompensation von Querempfindlichkeiten gegenüber Kompressibilität bzw. Schallgeschwindigkeit bereitzustellen. Die Aufgabe wird erfindungsgemäß gelöst durch das Verfahren gemäß dem unabhängigen Patentanspruch.

Das erfindungsgemäße Verfahren ist ein Verfahren zum Ermitteln eines physikalischen Parameters einer mit Gas beladenen Flüssigkeit, wobei das Gas insbesondere in Form von suspendierten Blasen in der Flüssigkeit vorliegt, mittels eines Messaufnehmers mit mindestens einem Messrohr zum Führen der mit Gas beladenen Flüssigkeit, wobei das Messrohr jeweils einen einlassseitigen Endabschnitt und einen auslassseitigen Endabschnitt aufweist, wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Biegeschwingungen verschiedener Moden mit unterschiedlichen Eigenfrequenzen anregbar ist, von denen ein f1-Mode keinen Schwingungsknoten zwischen den Fixiervorrichtungen aufweist, und wobei ein f3-Mode zwei Schwingungsknoten zwischen den Fixiervorrichtungen aufweist, wobei das Verfahren die folgenden Schritte aufweist: Ermitteln der Eigenfrequenz des f1-Modes und des f3-Modes; Ermitteln eines ersten vorläufigen Dichtewerts für die im Messrohr geführte mit Gas beladene Flüssigkeit auf Basis der Eigenfrequenz des f1-Modes; Ermitteln eines zweiten vorläufigen Dichtewerts für die im Messrohr geführte mit Gas beladene Flüssigkeit auf Basis der Eigenfrequenz des f3-Modes; Ermitteln eines Werts für die Schallgeschwindigkeit der im Messrohr geführten mit Gas beladenen Flüssigkeit, und zumindest eines von der Schallgeschwindigkeit und der Eigenfrequenz eines Modes abhängigen Korrekturterms für den vorläufigen Dichtewert, der auf Basis der Eigenfrequenz des Modes ermittelt wurde, zum Bestimmen eines korrigierten Dichtemesswerts; wobei der Korrekturterm $K_i$ für die vorläufigen Dichtewerte $\rho_i$ auf Basis der Eigenfrequenz des $f_i$-Modes folgende Form aufweist:

$$K_i := \left( 1 + \frac{r}{\left(\frac{g \cdot c}{f_i}\right)^2 - b} \right),$$

wobei

$$\rho_{corr} := \frac{\rho_i}{K_i}$$

wobei $r$ und $g$ gasunabängige Konstanten sind, $c$ die Schallgeschwindigkeit der mit Gas beladenen Flüssigkeit ist, $f_i$ die Eigenfrequenz des $f_i$-Modes ist, $\rho_{corr}$ die korrigierte Dichte ist, und b eine Skalierungskonstante ist, wobei insbesondere gilt: r/b < 1, insbesondere r/b < 0,9, und/oder b = 1.

Suspendierte Blasen sind insbesondere solche Blasen deren Größe nicht mehr als das Dreifache einer Eindringtiefe beträgt, welche von der kinematischen Viskosität der Flüssigkeit und der Eigenfrequenz des f1-Modes abhängt.

In erster Näherung kann der Zusammenhang eines vorläufigen Dichtewerts $\rho_i$ einer mit Gas beladenen Flüssigkeit auf Basis der Eigenfrequenz $f_i$ eines fi-Modes beschrieben werden als:

$$\rho_i = c_{0i} + c_{1i} \frac{1}{f_i^2} + c_{2i} \frac{1}{f_i^4} ,$$

wobei $c_{0i}$, $c_{1i}$, und $c_{2i}$, modenabhängige Koeffizienten sind.

Die obige Näherung berücksichtigt jedoch nicht die Einflüsse der schwingenden mit Gas beladenen Flüssigkeit im Messrohr. Je näher die Resonanzfrequenz der schwingenden mit Gas beladenen Flüssigkeit an der Eigenfrequenz eines Biegeschwingungsmodes liegt, umso stärker ist die Beeinflussung der Eigenfrequenz. Da die Resonanzfrequenz der mit Gas beladenen Flüssigkeit gewöhnlich oberhalb der Eigenfrequenz der Messrohre liegt, ist der Einfluss auf den f3-Biegeschwingungsmode größer als der Einfluss auf den f1-Biegeschwingungsmode. Dies führt zu unterschiedlichen vorläufigen modenspezifischen Dichtewerten, wobei das Verhältnis zwischen den vorläufigen Dichtewerten die Möglichkeit eröffnet, den Einfluss der schwingenden mit Gas beladenen Flüssigkeit zu ermitteln und zu korrigieren.

Die Resonanzfrequenz der schwingenden mit Gas beladenen Flüssigkeit hängt von deren Schallgeschwindigkeit ab. In einer Weiterbildung der Erfindung ist ein modenspezifischer Korrekturterm $K_i$ für einen vorläufigen Dichtewert daher eine Funktion eines Quotienten aus der Schallgeschwindigkeit der mit Gas beladenen Flüssigkeit und der Eigenfrequenz des Modes, mit dem der vorläufige Dichtemesswert ermittelt wurde.

In einer Weiterbildung der Erfindung wird die Schallgeschwindigkeit c der mit Gas beladenen Flüssigkeit bestimmt, indem der Schallgeschwindigkeitswert gesucht wird, bei dem der Quotient des ersten Korrekturterms für den ersten vorläufigen Dichtewert geteilt durch den zweiten Korrekturterm für den zweiten vorläufigen Dichtewert, dem Quotienten des ersten vorläufigen Dichtewerts geteilt durch den zweiten vorläufigen Dichtewert entspricht. Welche mathematische Vorgehensweise hierbei zum Einsatz kommt, ist nachrangig.

In einer Weiterbildung der Erfindung wird ist in der obigen Gleichung g vom Durchmesser des Messrohrs abhängiger Proportionalitätsfaktor zwischen einer Resonanzfrequenz $f_{res}$ der mit Gas beladenen Flüssigkeit und der Schallgeschwindigkeit der mit Gas beladenen Flüssigkeit, wobei gilt:

$$f_{res} = g \cdot c$$

In einer Weiterbildung der Erfindung werden die vorläufigen Dichtewerte auf Basis der Eigenfrequenz des des fi-Modes mittels eines Polynoms in $1/f_i$, insbesondere in $(1/f_i)^2$ bestimmt, wobei die Koeffizienten des Polynoms modenabhängig sind.

In einer Weiterbildung der Erfindung gilt für einen Dichtefehler $E_{\rho i}$ eines vorläufigen Dichtewerts auf Basis der Eigenfrequenz des fi-Modes:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,5 beispielsweise nicht weniger als 1,8 und insbesondere nicht weniger als 1,9 beträgt, wobei der Proportionalitätsfaktor k nicht mehr als 3, beispielsweise nicht mehr als 2,25 und insbesondere nicht mehr als 2,1 beträgt. In einer derzeit bevorzugten Ausgestaltung der Erfindung beträgt der Proportionalitätsfaktor k = 2.

Für einen Korrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

und

wobei $\dot{m}_v$ der vorläufige Massedurchflusswert ist.

In einer Weiterbildung der Erfindung umfasst das Verfahren weiterhin die folgenden Schritte: Bestimmen einer Abweichung zwischen dem ersten vorläufigen Dichtewert auf Basis der Eigenfrequenz des f1-Modes und dem zweiten vorläufigen Dichtewert auf Basis der Eigenfrequenz des f3-Modes; Prüfen ob die Abweichung größer ist als ein Referenzwert; und, wenn dies der Fall ist: Ermitteln und ggfs. Ausgeben eines Werts für die Schallgeschwindigkeit.

In einer Weiterbildung der Erfindung ist der Referenzwert für die Abweichung der Dichtewerte so gewählt, dass die Schallgeschwindigkeit mit einem statistischen Fehler von nicht mehr als 10%, insbesondere nicht mehr als 5% und bevorzugt nicht mehr als 2% bestimmt werden kann.

In einer Weiterbildung der Erfindung beträgt der Referenzwert nicht weniger als 0.2 kg/m³ insbesondere nicht weniger als 0.4 kg/m³, wobei der Referenzwert weiterhin nicht mehr als 2 kg/m³ beispielsweise nicht mehr als 1 kg/m³, und insbesondere nicht mehr als 0,6 kg/m³ beträgt.

In einer Weiterbildung der Erfindung wird das Verfahren insbesondere dann eingesetzt, wenn die im Messrohr schwingende, mit Gas beladene Flüssigkeit eine Resonanzfrequenz aufweist, die nicht mehr als das 20-fache der Eigenfrequenz des f1-Modes des Messrohrs beträgt.

In einer Weiterbildung der Erfindung wird das Verfahren dann eingesetzt, wenn die suspendierten Blasen einen Radius r aufweisen, der nicht mehr als das Fünffache, insbesondere nicht mehr als das Dreifache einer Eindringtiefe δ beträgt, welche gegeben ist als

$$\delta = (\nu/(\pi^* f_1))^{1/2},$$

wobei v die kinematische Viskosität der Flüssigkeit und f1 die Eigenfrequenz des f1-Modes ist.

Die Eindringtiefe δ beschreibt die Reichweite eines Strömungsfeldes aufgrund von Relativbewegungen einer suspendierten Blase gegenüber der sie umgebenden Flüssigkeit. Bei kleinen Radien wirken sich suspendierte Blasen im Wesentlichen auf die Kompressibilität aus, während bei Radien, welche die Eindringtiefe deutlich übersteigen, zusätzliche Effekte auftreten, welche die Genauigkeit der erfindungsgemäßen Korrekturen beeinträchtigen.

Die Erfindung wird nun anhand des in den Zeichnungen beschriebenen Ausführungsbeispiels näher erläutert.

Es zeigt:

Fig. 1: Ein Flussdiagramm für ein erstes Ausführungsbeispiel eines erfindungsgemäßen Verfahrens;

Fig. 2: Ein Flussdiagramm für ein Detail des ersten Ausführungsbeispiels des erfindungsgemäßen Verfahrens; und

Fig. 3: Ein Diagramm zur Darstellung des Zusammenhangs zwischen dem Verhältnis der Dichtemesswerte und der Schallgeschwindigkeit;

Fig. 4: Ein Diagramm zur Darstellung des Zusammenhangs zwischen einem Dichtekorrekturwert und der Schallgeschwindigkeit;

Fig. 5a: Ein Diagramm zur Darstellung mit dem erfindungsgemäßen Verfahren ermittelten Schallgeschwindigkeitswerten; und

Fig. 5b: Ein Diagramm zur Darstellung mit dem erfindungsgemäßen Verfahren ermittelten Dichtewerten.

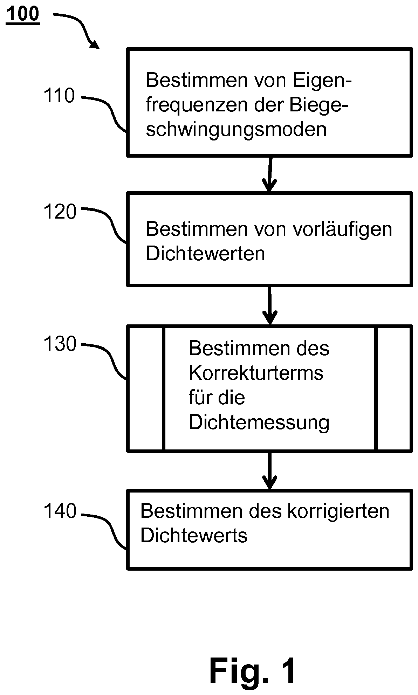

Das in Fig. 1 dargestellte Ausführungsbeispiel eines erfindungsgemäßen Verfahren 100 zum Bestimmen eines Dichtewertes beginnt in einem Schritt 110 die Bestimmung der Eigenfrequenzen des f1-Biegeschwingungsmodes und des f3-Biegeschwingungsmodes. Hierzu können der f1-Biegeschwingungsmode und der f3-Biegeschwingungsmode insbesondere gleichzeitig angeregt werden. Durch Maximieren des Verhältnisses von der Schwingungsamplitude zur modenspezifischen Erregerleistung durch Variieren der Anregungsfrequenzen können die gesuchten Eigenfrequenzen ermittelt werden.

Anhand der ermittelten Eigenfrequenzen fi werden in einem Schritt 120 vorläufige Dichtewerte $\rho_1$ und $\rho_3$ bestimmt als:

$$\rho_i = c_{0i} + c_{1i}\frac{1}{f_i^2} + c_{2i}\frac{1}{f_i^4},$$

wobei $c_{0i}$, $c_{1i}$, und $c_{2i}$, modenabhängige Koeffizienten sind.

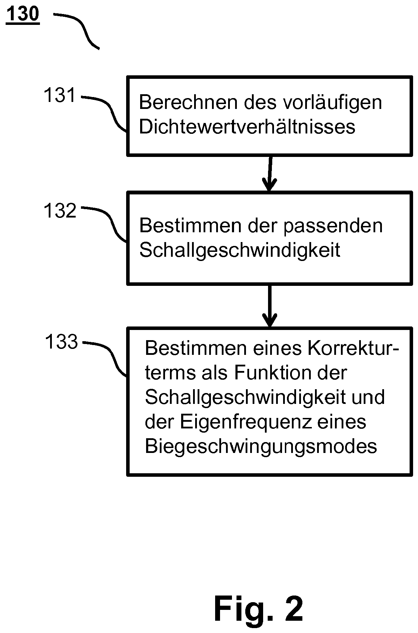

In einem Schritt 130, der weiter unten anhand von Fign. 2 bis 4 näher erläutert wird, erfolgt die Bestimmung eines Korrekturterms für die Dichtemessung.

Schließlich wird in einem Schritt 140 mittels des Korrekturterms ein Korrigierter Dichtewert bestimmt.

Wie in Fig. 2 dargestellt umfasst der Schritt 130 zum Bestimmen des Korrekturterms zunächst in einem Schritt 132 das Berechnen des Verhältnisses V der vorläufigen Dichtewerte, also beispielsweise die Division der vorläufigen Dichtewerte $\rho_1$ und $\rho_3$ zu V:= $\rho_1/\rho_3$.

Anschließend wird in einem Schritt 132 die Schallgeschwindigkeit c bestimmt, welche bei den gemessenen Eigenfrequenzen der Biegeschwingungsmoden zu dem berechneten Verhältnis V der vorläufigen Dichtewerte führt:

$$\frac{\left(1 + \dfrac{r}{\left(\dfrac{g \cdot c}{f_1}\right)^2 - b}\right)}{\left(1 + \dfrac{r}{\left(\dfrac{g \cdot c}{f_3}\right)^2 - b}\right)} = V$$

wobei r etwa 0,84, b=1 und g ein messrohrabhängiger Proportionalitätsfaktor zwischen Schallgeschwindigkeit und Resonanzfrequenz ist, der beispielsweise einen Wert von 10/m annehmen kann.

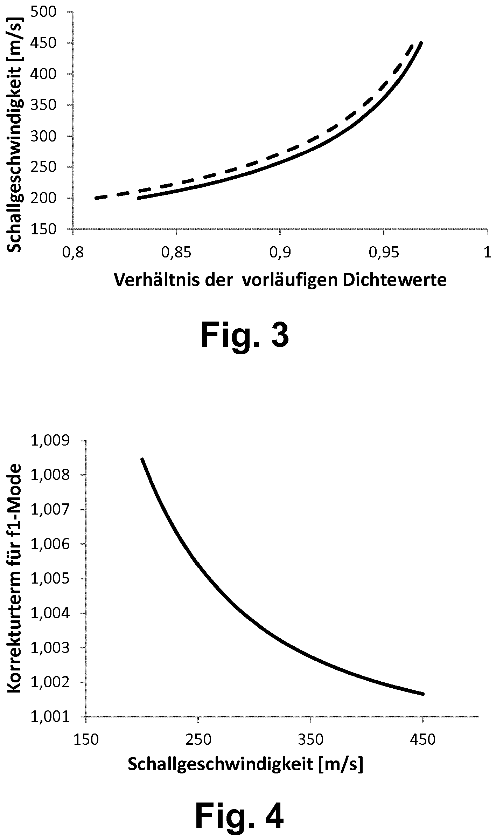

In Fig. 3 ist die Schallgeschwindigkeit als Funktion des Verhältnisses V der vorläufigen Dichtewerte für zwei verschiedene Wertepaare von Eigenfrequenzen der Biegeschwingungsmoden dargestellt. Wobei die durchgezogene Linie für f1 = 200 Hz und f3= 900 Hz gilt und die gestrichelte Linie für f1= 210 Hz und f3= 950 Hz. So erfüllt beispielsweise bei f1= 200 Hz und f3= 900 Hz eine Schallgeschwindigkeit von etwa c = 360 m/s die Bedingung V = 0,95 f1= 200 Hz und f3= 900 Hz.

Anhand der ermittelten Schallgeschwindigkeit wird dann im Schritt 133 des Verfahrens in Fig. 2 ein modenspezifischer Korrekturterm $K_i$ berechnet gemäß:

$$K_i := \left(1 + \frac{r}{\left(\frac{g \cdot c}{f_i}\right)^2 - 1}\right).$$

Der vorläufige Dichtewert $\rho_i$ wird schließlich im Schritt 140 des Verfahrens in Fig. 1 berechnet gemäß:

$$\rho_{corr} := \frac{\rho_i}{K_i}$$

Der vorläufige Dichtewert $\rho_i$ wird also durch den Korrekturterm $K_i$ geteilt, um den korrigierten Dichtewert $\rho_{corr}$ zu erhalten.

In Fig. 4 ist der im Schritt 133 ermittelte Korrekturterm $K_i$ für den f1 Mode bei einer Eigenfrequenz von f1 = 200 Hz dargestellt. Nach der in Schritt 132 ermittelten Schallgeschwindigkeit von c = 360 m/s wäre der vorläufige Dichtewert auf Basis der Eigenfrequenz des f1-Biegeschwingungsmodes etwa um 0,26% zu groß. Der vorläufige Dichtewert ist also durch den Korrekturterm 1,0026 zu teilen um den einen korrigierten Dichtewert zu erhalten.

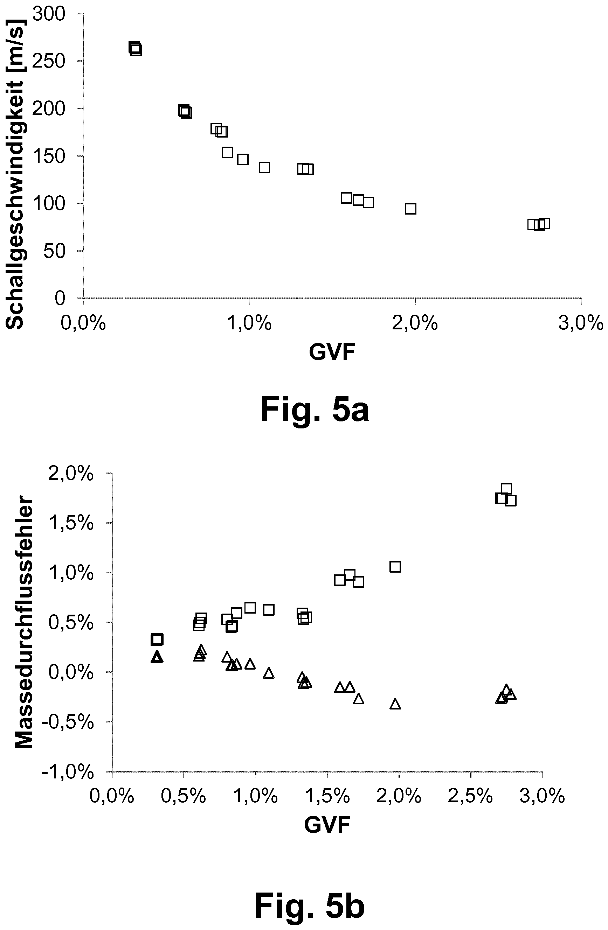

In Fig. 5a sind Ergebnisse für die erfindungsgemäße Bestimmung der Schallgeschwindigkeit von Salzwasser in Abhängigkeit vom Gasblasenanteil (GVF nach dem Englischen Gas Void Fraction) dargestellt. Während des Experiments nahm die Eigenfrequenz des f1-Modes dabei mit zunehmendem Gasblasenanteil von etwa 177,3 Hz auf etwa 174,5 Hz ab, während die Eigenfrequenz des f3-Modes von etwa 1088,8 Hz auf etwa 1015 Hz fiel.

In Fig. 5b sind schließlich Ergebnisse für die erfindungsgemäße Bestimmung des Massedurchflusses mittels des erfindungsgemäßen Verfahrens bei verschiedenen Werten für den Gasblasenanteil gezeigt, wobei die jeweiligen Korrekturterme zur Korrektur der vorläufigen Massedurchflusswerte auf Basis der in Fig. 5a dargestellten Schallgeschwindigkeitswerte ermittelt wurden. Die Quadrate beschreiben den Fehler für die unkorrigierten Werte, während die Dreiecke den Fehler für die erfindungsgemäß korrigierten Werte darstellen.

Um die Korrekturterme für einen vorläufigen Massedurchflussmesswert eines Coriolis-Massedurchflussmessgerätes, können aus dem Korrekturtermen für die Dichte bestimmt werden als, indem aus dem Korrekturterm $K_i$ für die Dichte der zunächst der Dichtefehler $E_{\rho i}$ bestimmt wird:

$$E_{\rho i} := K_i - 1,$$

Der Massedurchflussfehler $E_m$ zur Korrektur eines vorläufigen Massedurchflusswerts beträgt insbesondere das Doppelte $E_{\rho 1}$ des ersten vorläufigen Dichtefehlers $E_{\rho 1}$, also:

$$E_m := 2 \cdot E_{\rho 1}.$$

Gleichermaßen kann der Massedurchflussfehler $E_m$ berechnet werden als:

$$E_m := 2 \cdot \left( \frac{r}{\left( \frac{g \cdot c}{f_i} \right)^2 - 1} \right).$$

Für einen Korrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

und

wobei $\dot{m}_v$ ein vorläufiger Massedurchflusswert ist, der sich aus der Phasendifferenz zwischen den Signalen zweier symmetrisch am Messrohr angeordneter Schwingungssensoren und einem Kalibrierfaktor ergibt.

**Patentansprüche**

1. Verfahren zum Ermitteln eines physikalischen Parameters einer Flüssigkeit, welche eine Gasbeladung aufweist, wobei das Gas insbesondere in Form von suspendierten Blasen in der Flüssigkeit vorliegt, mittels eines Messaufnehmers mit mindestens einem Messrohr zum Führen des Mediums,
wobei das mindestens eine Messrohr einen einlassseitigen Endabschnitt und einen auslassseitigen Endabschnitt aufweist,
wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Biegeschwingungen verschiedener Moden mit unterschiedlichen Eigenfrequenzen anregbar ist, von denen ein f1-Mode keinen Schwingungsknoten zwischen den Fixiervorrichtungen aufweist, und wobei ein f3-Mode zwei Schwingungsknoten zwischen den Fixiervorrichtungen aufweist,
wobei das Verfahren (100) die folgenden Schritte umfasst:

    Ermitteln der Eigenfrequenz des f1-Modes und des f3-Modes (110);
    Ermitteln eines ersten vorläufigen Dichtewerts für die im Messrohr geführte gasbeladene Flüssigkeit auf Basis der Eigenfrequenz des f1-Modes (120);
    Ermitteln eines zweiten vorläufigen Dichtewerts für die im Messrohr geführte gasbeladene Flüssigkeit auf Basis der Eigenfrequenz des f3-Modes (120);
Ermitteln eines Werts für die Schallgeschwindigkeit der im Messrohr geführten mit Gas beladenen Flüssigkeit, und zumindest eines von der Schallgeschwindigkeit und der Eigenfrequenz eines Modes abhängigen Korrekturterms (130) für den vorläufigen Dichtewert, der auf Basis der Eigenfrequenz des Modes ermittelt wurde, zum Bestimmen eines korrigierten Dichtemesswerts (140);
wobei der Korrekturterm $K_i$ für die vorläufigen Dichtewerte $\rho_i$ auf Basis der Eigenfrequenz des $f_i$-Modes folgende Form aufweist:

$$K_i := \left( 1 + \frac{r}{\left(\frac{g \cdot c}{f_i}\right)^2 - b} \right),$$

wobei

$$\rho_{corr} := \frac{\rho_i}{K_i}$$

wobei $r$ und $g$ gasunabängige Konstanten sind, $c$ die Schallgeschwindigkeit der mit Gas beladenen Flüssigkeit ist, $f_i$ die Eigenfrequenz des $f_i$-Modes ist, $\rho_{corr}$ die korrigierte Dichte ist, und b eine Skalierungskonstante ist.

2. Verfahren nach Anspruch 1, wobei gilt:
   r/b < 1, insbesondere r/b < 0,9.

3. Verfahren nach Anspruch 1 oder 2, wobei b = 1.

4. Verfahren nach einem der Ansprüche 1 bis 3, wobei g vom Durchmesser des Messrohrs abhängiger Proportionalitätsfaktor zwischen einer Resonanzfrequenz $f_{res}$ der mit Gas beladenen Flüssigkeit und der Schallgeschwindigkeit der mit Gas beladenen Flüssigkeit ist, wobei gilt:

$$f_{res} = g \cdot c$$

5. Verfahren nach einem der vorhergehenden Ansprüche, wobei die Schallgeschwindigkeit c der mit Gas beladenen Flüssigkeit bestimmt wird, indem der Schallgeschwindigkeitswert gesucht wird, bei dem der Quotient des ersten Korrekturterms für den ersten vorläufigen Dichtewert geteilt durch den zweiten Korrekturterm für den zweiten vorläufigen Dichtewert, dem Quotienten des ersten vorläufigen Dichtewerts geteilt durch den zweiten vorläufigen Dichtewert entspricht.

6. Verfahren nach einem der vorhergehenden Ansprüche, wobei die vorläufigen Dichtewerte auf Basis der Eigenfrequenz des des $f_i$-Modes mittels eines Polynoms in $1/f_i$, insbesondere in $(1/f_i)^2$ bestimmt werden, wobei die Koeffizienten des Polynoms modenabhängig sind.

7. Verfahren nach Anspruch 1, wobei für einen Dichtefehler $E_{\rho i}$ eines vorläufigen Dichtewerts auf Basis der Eigenfrequenz des fi-Modes gilt:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,5, beispielsweise nicht weniger als 1,8 und insbesondere nicht weniger als 1,9 beträgt,
wobei der Proportionalitätsfaktor k nicht mehr als 3, beispielsweise nicht mehr als 2,25 und insbesondere nicht mehr als 2,1 beträgt,
wobei für den Korrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

wobei $\dot{m}_v$ der vorläufige Massedurchflusswert ist.

8. Verfahren nach einem der vorhergehenden Ansprüche, wobei das Verfahren weiterhin die folgenden Schritte umfasst:

   Bestimmen einer Abweichung zwischen dem ersten vorläufigen Dichtewert auf Basis der Eigenfrequenz des f1-Modes und dem zweiten vorläufigen Dichtewert auf Basis der Eigenfrequenz des f3-Modes;
   Prüfen, ob die Abweichung größer ist als ein Referenzwert; und,
   wenn dies der Fall ist: Ermitteln und ggfs. Ausgeben eines Werts für die Schallgeschwindigkeit.

9. Verfahren nach Anspruch 8, wobei der Referenzwert für die Abweichung der Dichtewerte so gewählt ist, dass die Schallgeschwindigkeit mit einem statistischen Fehler von nicht mehr als 10%, insbesondere nicht mehr als 5% und bevorzugt nicht mehr als 2% bestimmt werden kann.

10. Verfahren nach Anspruch 9,
    wobei der Referenzwert nicht weniger als 0.2 kg/m$^3$ insbesondere nicht weniger als 0.4 kg/m$^3$ beträgt, wobei der Referenzwert nicht mehr als 2 kg/m$^3$ beispielsweise nicht mehr als 1 kg/m$^3$, und insbesondere nicht mehr als 0,6 kg/m$^3$ beträgt.

11. Verfahren nach einem der vorhergehenden Ansprüche, wobei die im Messrohr schwingende, mit Gas beladene Flüssigkeit eine Resonanzfrequenz aufweist, die nicht mehr als das 20-fache der Eigenfrequenz des f1-Modes des Messrohrs beträgt.

12. Verfahren nach einem der vorhergehenden Ansprüche, wobei die suspendierten Blasen einen Radius r aufweisen, der nicht mehr als das Fünffache, insbesondere nicht mehr als das Dreifache einer Eindringtiefe δ betragen, welche gegeben ist als

$$\delta = (\nu/(\pi^* f_1))^{1/2},$$

wobei ν die kinematische Viskosität der Flüssigkeit ist.

## Claims

1. Procedure for determining a physical parameter of a liquid - said liquid having a gas content, wherein the gas is particularly present in the form of suspended bubbles in the liquid - by means of a sensor with at least a measuring tube to conduct the medium, wherein the at least one measuring tube has an end section on the inlet side and an end section on the outlet side,
   wherein the sensor has at least a fastening unit on the inlet side and a fastening unit on the outlet side with which the measuring tube is fixed in one of the end sections, wherein the measuring tube can be excited between the two fastening units to produce flexural vibrations of different modes with different natural frequencies, of which an f1 mode does not have any vibration node between the fastening units and an f3 mode has two vibration nodes between the fastening units,
   wherein the procedure (100) comprises the following steps:

   Determination of the natural frequency of the f1 mode and of the f3 mode (110);
   Determination of a first provisional density value for the gas-laden liquid transported in the measuring tube on the basis of the natural frequency of the f1 mode (120);
   Determination of a second provisional density value for the gas-laden liquid transported in the measuring tube on the basis of the natural frequency of the f3 mode (120);
   Determination of a value for the sonic velocity of the gas-laden liquid transported in the measuring tube, and at least a correction term (130), dependent on the sonic velocity and the natural frequency of a mode, for the provisional density value determined on the basis of the natural frequency of the mode, for the purpose of determining a corrected density measured value (140);
   where the correction term $K_i$ for the provisional density values $\rho i$ based on the natural frequency of the f$_i$, mode has the following form:

   $$K_i := \left(1 + \frac{r}{\left(\frac{g \cdot c}{f_i}\right)^2 - b}\right),$$

   where

   $$\rho_{corr} := \frac{\rho_i}{K_i}$$

   where r and g are gas-independent constants, c is the sonic velocity of the gas-laden liquid, $f_i$ is the natural frequency of the f$_i$ mode, $\rho corr$ is the corrected density and b is a scaling constant.

2. Procedure as claimed in Claim 1, wherein the following applies:
   r/b < 1, particularly r/b < 0,9.

3. Procedure as claimed in Claim 1 or 2, wherein b is equal to 1.

4. Procedure as claimed in one of the Claims 1 to 3, wherein g is a proportionality factor, which depends on the diameter of the measuring tube, between a resonance frequency f$_{res}$ of the gas-laden liquid and the sonic velocity of the gas-laden liquid, wherein the following applies:

   $$f_{res} = g \cdot c$$

5. Procedure as claimed in one of the previous claims, wherein the sonic velocity c of the gas-laden liquid is determined by searching for the sonic velocity value at which the quotient of the first correction term for the first provisional density value divided by the second correction term for the second provisional density value is equal to the quotient of the first provisional density value divided by the second provisional density value.

6. Procedure as claimed in one of the previous claims, wherein the provisional density values are determined on the basis of the natural frequency of the $f_i$ mode by means of a polynomial in $1/f_i$, particularly in $(1/f_i)^2$, wherein the coefficients of the polynomial are dependent on the mode.

7. Procedure as claimed in Claim 1, wherein the following formula applies for a density error $E_{\rho i}$ of a provisional density value based on the natural frequency of the fi mode:

$$E_{\rho i} := K_i - 1,$$

wherein a mass flow error $E_m$ of a provisional mass flow value is proportional to the density error $E_{\rho 1}$ of the first provisional density value, i.e.:

$$E_m := k \cdot E_{\rho 1},$$

wherein the proportionality factor k is not less than 1.5, for example not less than 1.8 and particularly not less than 1.9,
wherein the proportionality factor k is not greater than 3, for example not greater than 2.25 and particularly not greater than 2.1,
wherein following formula applies for the correction term $K_m$:

$$K_m := 1 + E_m,$$

wherein the corrected mass flow $m_{corr}$ is determined as follows:

$$\dot{m}_{corr} := \frac{\dot{m}_v}{K_m},$$

where $\dot{m}_v$ is the provisional mass flow value.

8. Procedure as claimed in one of the previous claims, wherein the procedure further comprises the following steps:

   Determination of a deviation between the first provisional density value based on the natural frequency of the f1 mode and the second provisional density value based on the natural frequency of the f3 mode; and
   Verification of whether the deviation is greater than a reference value; and,
if that is the case: determination and, where applicable, outputting of a value for the sonic velocity.

9. Procedure as claimed in Claim 8, wherein the reference value for the deviation of the density values is selected in such a way that the sonic velocity can be determined with a statistical error of not more than 10 %, particularly of not more than 5 % and preferably of not more than 2 %.

10. Procedure as claimed in Claim 9,
    wherein the reference value is not less than 0.2 kg/m$^3$, particularly less than 0.4 kg/m$^3$,
    wherein the reference value is not greater than 2 kg/m$^3$, for example not greater than 1 kg/m$^3$, and particularly not greater than 0.6 kg/m$^3$.

11. Procedure as claimed in one of the previous claims, wherein the gas-laden liquid vibrating in the measuring tube has a resonance frequency which is not greater than 20 times the natural frequency of the f1 mode of the measuring tube.

12. Procedure as claimed in one of the previous claims, wherein the suspended bubbles have a radius r which is not greater than five times, particularly not greater than three time, a penetration depth δ which is defined by the following formula:

$$\delta = (v/\pi * f_1))^{1/2},$$

where v is the kinematic viscosity of the liquid.

## Revendications

1. Procédé destiné à la détermination d'un paramètre physique d'un liquide - lequel liquide présente une charge gazeuse, le gaz se présentant notamment sous la forme de bulles en suspension dans le liquide - au moyen d'un capteur avec au moins un tube de mesure pour le guidage du produit,
   l'au moins un tube de mesure présentant une section d'extrémité côté entrée et une section d'extrémité côté sortie,
   le capteur présentant au moins un dispositif de fixation côté entrée et un dispositif de fixation côté sortie, dispositifs avec lesquels le tube de mesure est respectivement fixé dans l'une des sections d'extrémité, le tube de mesure pouvant être excité entre les deux dispositifs de fixation en vibrations de flexion de différents modes avec différentes fréquences naturelles, dont un mode f1 ne présente pas de nœud de vibration entre les dispositifs de fixation et un mode f3 présente deux nœuds de vibration entre les dispositifs de fixation,
le procédé (100) comprenant les étapes suivantes :

Détermination de la fréquence naturelle du mode f1 et du mode f3 (110) ;
Détermination d'une première valeur de densité provisoire pour le liquide chargé de gaz transporté dans le tube de mesure sur la base de la fréquence naturelle du mode f1 (120) ;
Détermination d'une deuxième valeur de densité provisoire pour le liquide chargé de gaz transporté dans le tube de mesure sur la base de la fréquence naturelle du mode f3 (120) ;
Détermination d'une valeur pour la vitesse du son du liquide chargé de gaz transporté dans le tube de mesure, et au moins un terme de correction (130), dépendant de la vitesse du son et de la fréquence naturelle d'un mode, pour la valeur de densité provisoire déterminée sur la base de la fréquence naturelle du mode, en vue de déterminer une valeur de mesure de densité corrigée (140) ;
le terme de correction $K_i$ pour les valeurs de densité provisoires $\rho i$ basées sur la fréquence naturelle du mode $f_i$ présentant la forme suivante :

$$K_i := \left( 1 + \frac{r}{\left(\frac{g \cdot c}{f_i}\right)^2 - b} \right),$$

avec

$$\rho_{corr} := \frac{\rho_i}{K_i}$$

$r$ et $g$ étant des constantes indépendantes du gaz, $c$ étant la vitesse du son du liquide chargé de gaz, $f_i$ la fréquence naturelle du mode $f_i$, $pcorr$ la densité corrigée et b une constante de mise à l'échelle.

2. Procédé selon la revendication 1, pour lequel la relation suivante s'applique :
r/b < 1, notamment r/b < 0,9.

3. Procédé selon la revendication 1 ou 2, pour lequel b est égal à 1.

4. Procédé selon l'une des revendications 1 à 3, pour lequel g est un facteur de proportionnalité, dépendant du diamètre du tube de mesure, entre une fréquence de résonance $f_{res}$ du liquide chargé de gaz et la vitesse du son du liquide chargé de gaz, avec la relation suivante :

$$f_{res} = g \cdot c$$

5. Procédé selon l'une des revendications précédentes, pour lequel la vitesse du son c du liquide chargé de gaz est déterminée par la recherche de la valeur de vitesse du son à laquelle le quotient du premier terme de correction pour la première valeur de densité provisoire divisé par le deuxième terme de correction pour la deuxième valeur de densité provisoire est égal au quotient de la première valeur de densité provisoire divisée par la deuxième valeur de densité provisoire.

6. Procédé selon l'une des revendications précédentes, pour lequel les valeurs de densité provisoires sont déterminées sur la base de la fréquence naturelle du mode $f_i$ au moyen d'un polynôme en $1/f_i$, notamment en $(1/f_i)^2$, les coefficients du polynôme étant dépendants du mode.

7. Procédé selon la revendication 1, pour lequel la formule suivante s'applique pour une erreur de densité $E_{\rho i}$ d'une valeur de densité provisoire basée sur la fréquence naturelle du mode fi :

$$E_{\rho i} := K_i - 1,$$

pour lequel une erreur de débit massique $E_m$ d'une valeur de débit massique provisoire est proportionnelle à l'erreur de densité $E_{\rho 1}$ de la première valeur de densité provisoire, c'est-à-dire :

$$E_m := k \cdot E_{\rho 1},$$

le facteur de proportionnalité k n'étant pas inférieur à 1,5, par exemple pas inférieur à 1,8 et notamment pas inférieur à 1,9,
le facteur de proportionnalité k n'étant pas supérieur à 3, par exemple pas supérieur à 2,25 et notamment pas supérieur à 2,1,
la formule suivante s'appliquant pour le terme de correction $K_m$ :

$$K_m := 1 + E_m,$$

le débit massique corrigé $\dot{m}_{corr}$ étant déterminé comme suit :

$$\dot{m}_{corr} := \frac{\dot{m}_v}{K_m},$$

$\dot{m}_v$ étant la valeur de débit massique provisoire.

8. Procédé selon l'une des revendications précédentes, lequel procédé comprend en outre les étapes suivantes :

Détermination d'un écart entre la première valeur de densité provisoire basée sur la fréquence naturelle du mode f1 et la deuxième valeur de densité provisoire basée sur la fréquence naturelle du mode f3 ; et

Vérification si l'écart est supérieur à une valeur de référence ; et,

si c'est le cas: Détermination et, le cas échéant, sortie d'une valeur pour la vitesse du son.

9. Procédé selon la revendication 8, pour lequel la valeur de référence pour l'écart des valeurs de densité est choisie de telle sorte que la vitesse du son puisse être déterminée avec une erreur statistique ne dépassant pas 10 %, notamment ne dépassant pas 5 % et de préférence ne dépassant pas 2 %.

10. Procédé selon la revendication 9,
pour lequel la valeur de référence n'est pas inférieure à 0,2 kg/m$^3$, notamment pas inférieure à 0,4 kg/m$^3$, pour lequel la valeur de référence n'est pas supérieure à 2 kg/m$^3$, par exemple pas supérieure à 1 kg/m$^3$, et notamment pas supérieure à 0,6 kg/m$^3$.

11. Procédé selon l'une des revendications précédentes, pour lequel le liquide chargé de gaz vibrant dans le tube de mesure présente une fréquence de résonance qui n'est pas supérieure à 20 fois la fréquence naturelle du mode f1 du tube de mesure.

12. Procédé selon l'une des revendications précédentes, pour lequel les bulles en suspension présentent un rayon r qui n'est pas supérieur à cinq fois, notamment pas supérieur à trois fois, une profondeur de pénétration δ qui est définie par la formule suivante :

$$\delta = (v/\pi{*}f_1))^{1/2},$$

où v est la viscosité cinématique du liquide.

**100**

110 — Bestimmen von Eigenfrequenzen der Biegeschwingungsmoden

120 — Bestimmen von vorläufigen
Dichtewerten

130 — Bestimmen des
Korrekturterms
für die
Dichtemessung

140 — Bestimmen des korrigierten
Dichtewerts

# Fig. 1

**130**

**131** — Berechnen des vorläufigen Dichtewertverhältnisses

**132** — Bestimmen der passenden Schallgeschwindigkeit

**133** — Bestimmen eines Korrektur-terms als Funktion der Schallgeschwindigkeit und der Eigenfrequenz eines Biegeschwingungsmodes

# Fig. 2

**Fig. 3**

**Fig. 4**

**Fig. 5a**

**Fig. 5b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110264385 A1
- WO 0101086 A1